# EUROPEAN PATENT APPLICATION

(11) **EP 4 850 820 A1**
(43) Date of publication of application: **09.12.2026**
(21) Application number: 25845398.4
(22) Date of filing: 22.07.2025
(51) Int. Cl.: B05C 1/08, B05C 11/10, H01M 50/449

(54) **COATING DEVICE AND METHOD OF MANUFACTURING SEPARATOR USING SAME**

(30) Priority: 23.07.2024 KR 20240097143
(71) Applicant: LG Energy Solution, Ltd., Seoul 07335 (KR)
(72) Inventor: LEE, Byeong-Kyu, Daejeon 34122 (KR); KIM, Yu-Bae, Daejeon 34122 (KR); LEE, Seung-Hyun, Daejeon 34122 (KR); KA, Kyung-Ryun, Daejeon 34122 (KR)
(74) Representative: Hoffmann Eitle
(86) International application number: PCT/KR2025/010801
(87) International publication number: WO 2026/024052

(57) **Abstract**

The present disclosure provides a coating apparatus including a storage unit configured to hold a coating solution; a coating roll disposed in the storage unit and configured to transfer the coating solution from the storage unit to at least one surface of a substrate being transported in a direction; and at least one position adjustment roll spaced apart from the storage unit and configured to adjust a height of the substrate while in contact with at least one end portion of the substrate in a width direction.

## Description

### TECHNICAL FIELD

The present disclosure relates to a coating apparatus and a method for manufacturing a separator using the same.

This application is based on and claims priority from Korean Patent Application No. 10-2024-0097143 filed on July 23, 2024 with the Korean Intellectual Property Office, the disclosure of which is incorporated herein in its entirety by reference.

### BACKGROUND ART

There has been an increasing interest in energy storage technology in recent years. As the range of applications is extended to energy for mobile phones, camcorders, laptop computers and electric vehicles, many efforts in research and development of electrochemical devices have been made. In this aspect, electrochemical devices are attracting attention, and among them, development of rechargeable secondary batteries is becoming the focus of attention.

Secondary batteries are a chemical battery that can be used semi-permanently by continuously repeating charge and discharge using electrochemical reactions, and they are classified into lead-acid batteries, nickel-cadmium batteries, nickel-hydrogen batteries and lithium secondary batteries. Among them, lithium secondary batteries are leading the secondary battery market due to higher voltage and energy density than the other types of batteries.

Lithium secondary batteries have a structure in which an electrode assembly is filled with an electrolyte, the electrode assembly including a positive electrode and a negative electrode, each including an active material coated on a current collector, and a separator interposed between the positive electrode and the negative electrode. In this instance, the separator of the lithium secondary battery is manufactured by applying a coating solution for forming a porous coating layer to a porous polymer substrate and drying a solvent.

A method for applying the coating solution to the substrate, specifically the porous polymer substrate may include, for example, dip coating, die coating, roll coating or comma coating. In this instance, roll coating refers to a method that transfers the coating solution stored in a storage to the substrate.

Meanwhile, the coating solution is transferred to two end portions of the substrate in the width direction, and during drying, hot air may force the two end portions of the substrate to vibrate, and the two end portions of the substrate may not be kept in the fixed state. Due to this problem, the coating solution transferred to the two end portions of the substrate may drift away, and due to the adrift coating solution, the coating solution may not be evenly applied to the substrate. To avoid quality reduction of the separator, suggestions have been made to leave the two end portions of the substrate in the width direction uncoated without transferring the coating solution.

Meanwhile, a larger number of uncoated portions at the two end portions of the substrate in the width direction increases the area that will be discarded during slitting in the final step. Accordingly, there is a need for a novel coating apparatus capable of adjusting the coating solution transfer area in the width direction of the substrate, and a method for manufacturing a separator using the same.

### DISCLOSURE

### Technical Problem

The present disclosure is designed to solve the above-described problems, and specifically, the present disclosure is directed to providing a coating apparatus that does not transfer a coating solution to two end portions of a substrate in the width direction and a method for manufacturing a separator using the same.

The present disclosure is further directed to providing a separator having a coating layer formed evenly using the coating apparatus.

The present disclosure is further directed to providing a coating apparatus capable of changing the thickness and width of the coating layer along the length direction of the substrate and a method for manufacturing a separator using the same.

### Technical Solution

To achieve the above-described objectives, according to an aspect of the present disclosure, there are provided a coating apparatus of the following embodiments and a method for manufacturing a separator using the same.

According to a first embodiment, there is provided the coating apparatus including a storage unit configured to hold a coating solution; a coating roll disposed in the storage unit and configured to transfer the coating solution from the storage unit to at least one surface of a substrate being transported in a direction; and at least one position adjustment roll spaced apart from the storage unit and configured to adjust a height of the substrate while in contact with at least one end portion of the substrate in a width direction.

According to a second embodiment, in the first embodiment, the position adjustment roll may contact the surface of the substrate to which the coating solution is transferred.

According to a third embodiment, in any one of the first or second embodiment, the at least one position adjustment roll may be disposed on each of an upstream side and a downstream side of a transport direction of the substrate, and a central axis of the position adjustment roll on the upstream side and a central axis of the position adjustment roll on the downstream side may be parallel to each other.

According to a fourth embodiment, in any one of the first to third embodiments, the position adjustment roll may include a first position adjustment roll disposed at a first position; a second position adjustment roll disposed at a second position; a third position adjustment roll disposed at a third position; and a fourth position adjustment roll disposed at a fourth position, according to the position of the position adjustment roll, wherein the first position adjustment roll may be located on a left front side, the second position adjustment roll may be located on a right front side, the third position adjustment roll may be located on a left rear side, and the fourth position adjustment roll may be located on a right rear side.

According to a fifth embodiment, in the fourth embodiment, when an angle between a direction of a central axis of the first position adjustment roll and a direction of a central axis of the coating roll is -θ, an angle between a direction of a central axis of the second position adjustment roll and the direction of the central axis of the coating roll may be θ.

According to a sixth embodiment, in any one of the fourth or fifth embodiment, a direction of a central axis of the first position adjustment roll and a direction of a central axis of the third position adjustment roll may be parallel.

According to a seventh embodiment, in any one of the fourth to sixth embodiments, when an angle between a direction of a central axis of the first position adjustment roll and a direction of a central axis of the coating roll is -θ, the position adjustment roll may further include a first position adjustment auxiliary roll that precedes the contact of the first position adjustment roll and the substrate, and having an angle of -θ' with the direction of the central axis of the coating roll, wherein θ' may be smaller in size than θ.

According to an eighth embodiment, in any one of the first to seventh embodiments, the coating apparatus may further include a cleaning member configured to wash a surface of the position adjustment roll.

According to a ninth embodiment, in any one of the first to eighth embodiments, the position adjustment roll may be surface-treated.

According to a tenth embodiment, in any one of the first to ninth embodiments, the coating apparatus may further include an adjustment unit disposed outside of the storage unit and configured to adjust a position of the position adjustment roll.

According to an eleventh embodiment, in any one of the first to tenth embodiments, the coating apparatus may further include a gas spray unit configured to spray gas toward the other surface of the substrate opposite to one surface of the substrate that contacts the coating roll.

According to a twelfth embodiment, there is provided a method for manufacturing a separator using the coating apparatus of any one of the first to eleventh embodiments, the method including step (S10) of feeding a coating solution to the storage unit; step (S20) of adjusting a position of at least one position adjustment roll that contacts at least one end portion of a substrate in a width direction to bring at least a part of a surface of the substrate being transported in a direction into contact with the coating roll; and step (S30) of transferring the coating solution held in the storage unit to the surface of the substrate using the coating roll.

According to a thirteenth embodiment, in the twelfth embodiment, in the step (S20), the position of the at least one position adjustment roll is adjusted so that a tension of the substrate is 10 N to 200 N.

According to a fourteenth embodiment, in any one of the twelfth or thirteenth embodiment, in the step (S20), the position of the at least one position adjustment roll is moved with time.

According to a fifteenth embodiment, in any one of the twelfth or thirteenth embodiment, in the step (S30), a coating solution transfer area on the surface of the substrate may be 50% to 99% based on a total area 100% of the surface of the substrate.

According to a sixteenth embodiment, in any one of the twelfth to fifteenth embodiments, in the step (S30), a ratio (Wc/W) of a length (W) of a coating solution transfer area in a width direction to a total length (W) of the substrate in the width direction may be 0.8 to 0.99.

According to a seventeenth embodiment, in any one of the twelfth to sixteenth embodiments, the step (S30) may further include a step of spraying gas toward the other surface of the substrate opposite to one surface of the substrate that contacts the coating roll.

### Advantageous Effects

The coating apparatus according to an embodiment of the present disclosure may adjust the coating solution transfer location.

The coating apparatus according to an embodiment of the present disclosure may provide the separator having the uniform coating layer.

The coating apparatus according to an embodiment of the present disclosure may change the thickness and width of the coating layer along the length direction of the substrate.

The coating apparatus according to an embodiment of the present disclosure may avoid quality reducing during drying by intentionally forming the uncoated portions at the two end portions of the substrate in the width direction.

The coating apparatus according to an embodiment of the present disclosure may minimize the coating layer at the area that will be discarded during slitting in the final step by changing the thickness and width of the coating layer, thereby minimizing the amount of coating solution used.

The method for manufacturing the separator according to an embodiment of the present disclosure may adjust the position of the substrate to which the coating solution is transferred.

The method for manufacturing the separator according to an embodiment of the present disclosure may provide the separator having the uniform coating layer.

The method for manufacturing the separator according to an embodiment of the present disclosure may change the thickness and width of the coating layer along the length direction of the substrate.

The method for manufacturing the separator according to an embodiment of the present disclosure may avoid quality reducing during drying by intentionally forming the uncoated portions at the two end portions of the substrate in the width direction.

The method for manufacturing the separator according to an embodiment of the present disclosure may minimize the coating layer at the area that will be discarded during slitting in the final step by changing the thickness and width of the coating layer, thereby minimizing the amount of coating solution used.

### BRIEF DESCRIPTION OF THE DRAWINGS

The accompanying drawings illustrate the exemplary embodiments of the present disclosure and together with the foregoing description, serve to provide a better understanding of the technical aspects of the present disclosure, and thus the present disclosure should not be construed as being limited to the accompanying drawings.
FIG. 1 schematically shows the structure of a coating apparatus according to an embodiment of the present disclosure.
FIG. 2 schematically shows a coating apparatus according to an embodiment of the present disclosure and the transfer of a coating solution to at least one surface of a substrate using the coating apparatus when viewed from the X-axis direction.
FIG. 3 schematically shows the structure of a coating apparatus according to an embodiment of the present disclosure.
FIG. 4 schematically shows the structure of a coating apparatus according to an embodiment of the present disclosure.
FIG. 5 schematically shows a position adjustment roll and a substrate according to an embodiment of the present disclosure when viewed from the Y-axis direction.
FIG. 6 schematically shows the structure of a coating apparatus according to an embodiment of the present disclosure.
FIG. 7 schematically shows a position adjustment roll, a position adjustment auxiliary roll and a substrate according to an embodiment of the present disclosure when viewed from the Y-axis direction.
FIG. 8a schematically shows the structure of a coating apparatus according to an embodiment of the present disclosure.
FIG. 8b schematically shows the structure of a coating apparatus according to an embodiment of the present disclosure.
FIG. 9 schematically shows the structure of a coating apparatus according to an embodiment of the present disclosure.
FIG. 10a schematically shows the structure of a coating apparatus according to an embodiment of the present disclosure.
FIG. 10b schematically shows the structure of a coating apparatus according to an embodiment of the present disclosure.
FIG. 11 schematically shows the structure of a coating apparatus according to an embodiment of the present disclosure.
FIG. 12 schematically shows the transfer of a coating solution to at least one surface of a substrate using a coating apparatus according to an embodiment of the present disclosure when viewed from the Y-axis direction.
FIG. 13 schematically shows a coating apparatus according to an embodiment of the present disclosure and the transfer of a coating solution to at least one surface of a substrate using the coating apparatus when viewed from the X-axis direction.
FIG. 14 schematically shows a coating solution transferred to at least one surface of a substrate according to an embodiment of the present disclosure.

### BEST MODE

It should be understood that the terms or words used in the specification and the appended claims should not be construed as limited to general and dictionary meanings, and rather, should be interpreted based on the meanings and concepts corresponding to technical aspects of the present disclosure on the basis of the principle that the inventor is allowed to define the terms appropriately for the best explanation.

The terms as used herein are used to describe the exemplary embodiments of the present disclosure but not intended to be limiting. The singular forms include the plural forms unless the context clearly indicates otherwise.

### <Definition>

The term ┌comprise┘ when used in this specification, specifies the presence of the stated elements, but does not preclude the presence or addition of one or more other elements, unless the context clearly indicates otherwise.

### <Coating apparatus>

The present disclosure provides a coating apparatus 10.

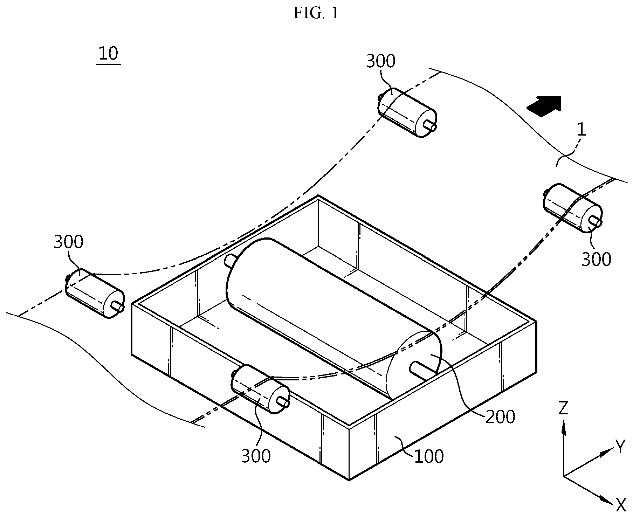

FIG. 1 schematically shows the structure of the coating apparatus 10 according to an embodiment of the present disclosure.

In an embodiment of the present disclosure, the coating apparatus 10 of the present disclosure includes a storage unit 100 configured to hold a coating solution; a coating roll 200 disposed in the storage unit 100 and configured to transfer a coating solution 2 from the storage unit 100 to at least one surface of a substrate 1 being transported in a direction; and at least one position adjustment roll 300 spaced apart from the storage unit 100 and configured to adjust the height of the substrate 1 while in contact with at least one end portion of the substrate 1 in the width direction.

In this instance, although the substrate 1 is shown in FIG. 1 for reference, it should not be construed as limiting the coating apparatus 10 of the present disclosure. The substrate 1 may be a porous polymer substrate for the manufacture of a separator for a secondary battery. The coating solution 2 may be a coating solution in slurry state, including a binder polymer, inorganic particles and a solvent. The coating solution 2 is transferred to at least one surface of the substrate 1 to manufacture the separator having an inorganic coating layer on the porous polymer substrate. The coating apparatus 10 of the present disclosure is suitable for use in separator coating.

In this specification, the direction in which the substrate 1 is transported may be +Y-axis direction in FIG. 1. Accordingly, in this specification, +Y-axis direction is also referred to as "the transport direction of the substrate".

Furthermore, in this specification, "an upstream side of the transport direction of the substrate" or "an upstream side" refers to preceding the contact of the substrate 1 with the coating roll 200, and "a downstream side of the transport direction of the substrate" or "a downstream side" refers to following the contact of the substrate 1 with the coating roll 200.

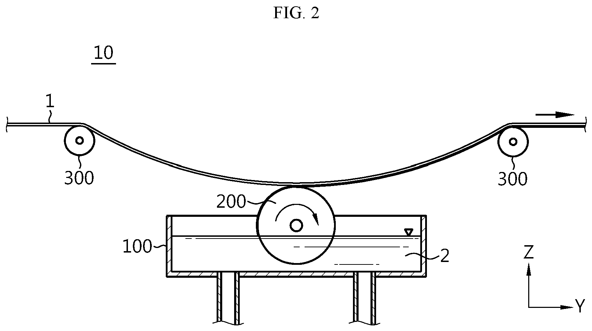

FIG. 2 schematically shows the coating apparatus 10 according to an embodiment of the present disclosure and the transfer of the coating solution 2 to at least one surface of the substrate 1 using the coating apparatus 10 when viewed from the X-axis direction.

In an embodiment of the present disclosure, the position adjustment roll 300 may contact a surface of the substrate 1 to which the coating solution 2 is transferred.

In this instance, although the coating solution 2 is shown in FIG. 2 for reference, it should not be construed as limiting the coating apparatus 10 of the present disclosure.

In an embodiment of the present disclosure, the position adjustment roll 300 may contact the surface of the substrate 1 to which the coating solution 2 is transferred, and the position of the position adjustment roll 300 may be adjusted to reduce the tension applied to the central portion of the substrate 1 in the width direction to cause the substrate 1 to sag, thereby bringing the substrate 1 and the coating roll 200 into contact with each other. Referring to FIG. 2, at least one position adjustment roll 300 may be disposed on each of the upstream side and the downstream side, and for example, may be disposed at two end portions of the substrate 1 in the width direction on each of the upstream side and the downstream side. In this instance, because the position adjustment roll 300 contacts the two end portions of the substrate 1 in the width direction, the central portion of the substrate 1 in the width direction may be located closer to the coating roll 200 than the two end portions of the substrate 1 in the width direction. By this principle, the coating solution 2 may be transferred to the central portion of the substrate 1 in the width direction.

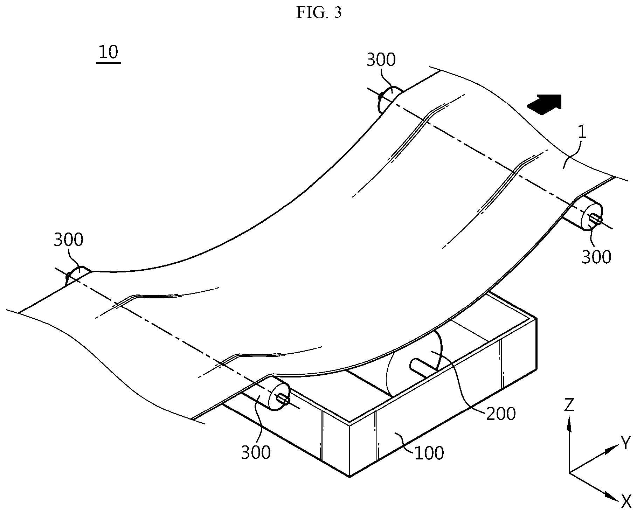

FIG. 3 schematically shows the structure of the coating apparatus 10 according to an embodiment of the present disclosure.

In an embodiment of the present disclosure, at least one position adjustment roll 300 may be disposed on each of the upstream side and the downstream side of the transport direction of the substrate 1, and the central axis of the position adjustment roll 300 on the upstream side and the central axis of the position adjustment roll 300 on the downstream side may be parallel to each other. Referring to FIG. 3, the dotted line shown on the position adjustment roll 300 indicates the direction of the central axis of the position adjustment roll 300, and the plurality of dotted lines shown in FIG. 3 are parallel to each other. When the directions of the central axes of the plurality of position adjustment rolls 300 are parallel to each other, after the coating solution 2 is transferred to at least one surface of the substrate 1, the coating solution may not flow in any one direction, thereby forming the coating layer more evenly.

Meanwhile, as will be described below, to make sure that the directions of the central axes of the plurality of position adjustment rolls 300 are parallel to each other, the direction of the central axis of a first position adjustment roll 310 and the direction of the central axis of a second position adjustment roll 320 may be parallel to each other. In addition, the direction of the central axis of a third position adjustment roll 330 and the direction of the central axis of a fourth position adjustment roll 340 may be parallel to each other.

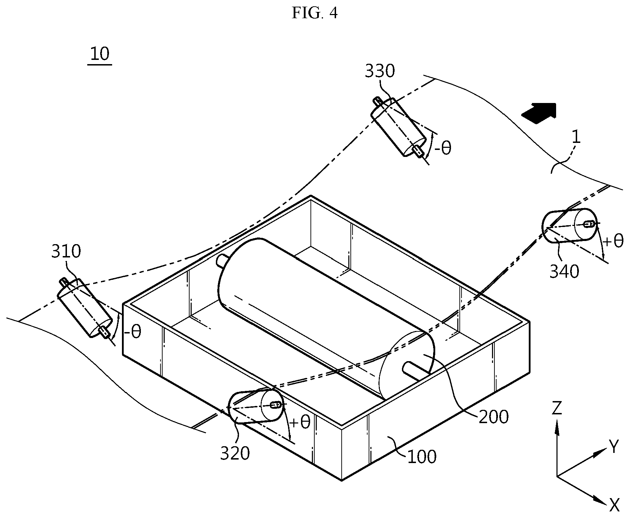

FIG. 4 schematically shows the structure of the coating apparatus 10 according to an embodiment of the present disclosure.

In an embodiment of the present disclosure, as shown in FIG. 4, the position adjustment rolls 300 may include the first position adjustment roll 310 disposed at a first position; the second position adjustment roll 320 disposed at a second position; the third position adjustment roll 330 disposed at a third position; and the fourth position adjustment roll 340 disposed at a fourth position, according to the position of the position adjustment roll. The first position adjustment roll 310 may be located on the left front side, the second position adjustment roll 320 may be located on the right front side, the third position adjustment roll 330 may be located on the left rear side, and the fourth position adjustment roll 340 may be located on the right rear side.

In this specification, "front" refers to an upstream side direction on the basis of the direction in which the substrate 1 is transported to the coating apparatus 10 (i.e., -Y-axis direction). Also, in this specification, "rear" refers to a direction after the coating solution is transferred to the substrate by the coating roll on the basis of the transport direction of the substrate 1 (i.e., +Y-axis direction).

In this specification, when viewing the coating apparatus from the Z-axis direction, i.e., from above, "left" refers to -X-axis direction and "right" refers to +X-axis direction.

In an embodiment of the present disclosure, when an angle between the direction of the central axis of the first position adjustment roll 310 and the direction of the central axis of the coating roll 200 is -θ, an angle between the direction of the central axis of the second position adjustment roll 320 and the direction of the central axis of the coating roll 200 may be θ. Here, θ without the sign "-" refers to +θ. That is, when it is assumed that the direction of the central axis of the coating roll 200 is horizontal, the direction of the central axis of the first position adjustment roll 310 may form an angle of -θ with the direction of the central axis of the coating roll 200, and the direction of the central axis of the second position adjustment roll 320 and the direction of the central axis of the coating roll 200 may form an angle of +θ. That is, the angle between the direction of the central axis of the first position adjustment roll 310 and the direction of the central axis of the coating roll 200 and the angle between the direction of the central axis of the second position adjustment roll 320 and the direction of the central axis of the coating roll 200 may be equal in size but opposite in direction.

In the present disclosure, the angle between the directions of the central axes may be found through vector calculation.

In this case, the substrate 1 may sag at the central portion in the width direction by the position adjustment rolls310, 320, 330, 340, making it easier to bring the central portion in the width direction into contact with the coating roll 200.

In an embodiment of the present disclosure, θ may be 0° or more and 90° or less, 2° or more and 45° or less, 4° or more and 30° or less, 6° or more and 25° or less, or 8° or more and 15° or less. In the present disclosure, where θ is a negative number, when viewed toward the Y-axis, it represents a clockwise rotation by θ, and where θ is a positive number, it represents a counterclockwise rotation by θ.

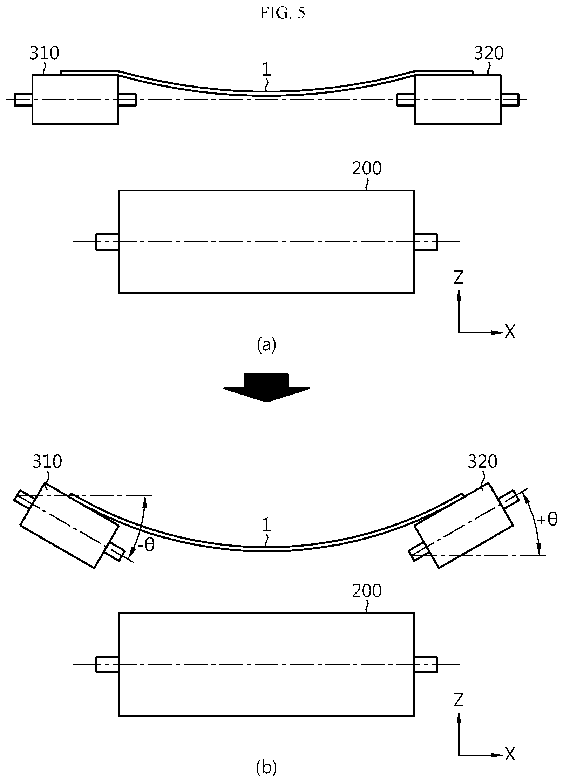

FIG. 5 schematically shows the position adjustment rolls 310, 320 and the substrate 1 according to an embodiment of the present disclosure when viewed from the Y-axis direction.

Specifically, (a) of FIG. 5 shows that each of the angle between the direction of the central axis of the first position adjustment roll 310 and the direction of the central axis of the coating roll and the angle between the direction of the central axis of the second position adjustment roll 320 and the direction of the central axis of the coating roll is 0°, and (b) of FIG. 5 shows that the angle between the direction of the central axis of the first position adjustment roll 310 and the direction of the central axis of the coating roll is -θ, and the angle between the direction of the central axis of the second position adjustment roll 320 and the direction of the central axis of the coating roll are θ. In this instance, the substrate 1 in (b) of FIG. 5 may sag toward the coating roll 200 at the central portion in the width direction to a greater degree of sagging than the substrate 1 in (a) of FIG. 5, and make contact with the coating roll 200 more easily.

Meanwhile, in an embodiment of the present disclosure, the direction of the central axis of the first position adjustment roll 310 and the direction of the central axis of the third position adjustment roll 330 may be parallel to each other. For example, in FIG. 4, the angle between the direction of the central axis of the first position adjustment roll 310 and the direction of the central axis of the coating roll 200 may be -θ, and the angle between the direction of the central axis of the third position adjustment roll 330 and the direction of the central axis of the coating roll 200 may be -θ. In this case, the coating solution 2 may be stably transferred to at least one surface of the substrate 1.

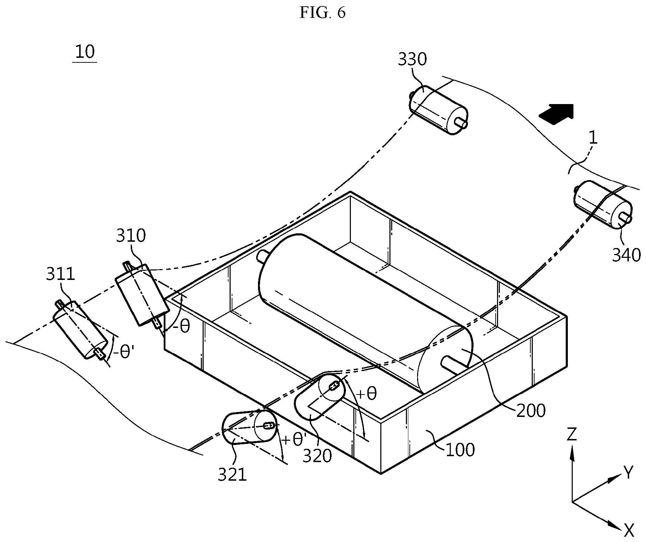

FIG. 6 schematically shows the structure of the coating apparatus 10 according to an embodiment of the present disclosure.

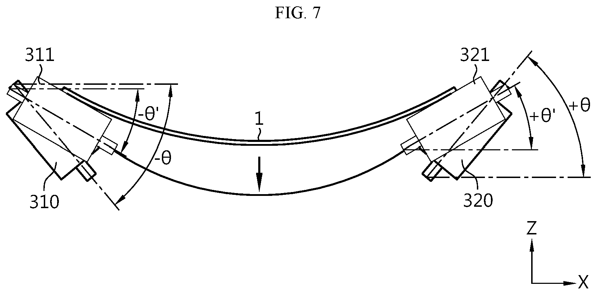

FIG. 7 schematically shows the position adjustment rolls 310, 320, position adjustment auxiliary rolls 311, 321 and the substrate 1 according to an embodiment of the present disclosure when viewed from the Y-axis direction.

When the angle between the direction of the central axis of the first position adjustment roll 310 and the direction of the central axis of the coating roll 200 is -θ, the coating apparatus 10 may further include a first position adjustment auxiliary roll 311 that precedes the contact of the first position adjustment roll 310 with the substrate, in other words, disposed in a further upstream direction and having an angle of -θ' with the direction of the central axis of the coating roll 200, and a second position adjustment auxiliary roll 321 that precedes the contact of the second position adjustment roll 320 with the substrate, in other words, disposed in a further upstream direction and having an angle of θ' with the direction of the central axis of the coating roll 200, wherein θ' may be smaller in size than θ. The θ' and θ may be compared based on absolute values.

As described above, in case where the first position adjustment auxiliary roll 311 is further included, when the substrate 1 gets closer to the coating apparatus 10, the central portion of the substrate 1 in the width direction may be prone to sequentially sag downwards (i.e., -Z-axis direction). Specifically, as shown in FIG. 7, it may be found that the degree of sagging of the substrate 1 at the central portion in the width direction by the first position adjustment roll 310 and the second position adjustment roll 320 is greater than the degree of sagging of the substrate 1 at the central portion in the width direction by the first position adjustment auxiliary roll 311 and the second position adjustment auxiliary roll 321. Accordingly, in case where the first position adjustment auxiliary roll 311 and the second position adjustment auxiliary roll 321 are further included, when the substrate 1 gets closer to the coating apparatus 10, the central portion of the substrate 1 in the width direction may be prone to sequentially sag downwards (i.e., -Z-axis direction).

In an embodiment of the present disclosure, the coating apparatus 10 may include a plurality of first position adjustment auxiliary rolls 311 and a plurality of second position adjustment auxiliary rolls 321, or may not include the first position adjustment auxiliary roll 311 and the second position adjustment auxiliary roll 321.

In an embodiment of the present disclosure, the angle between the direction of the central axis of the third position adjustment roll 330 and the direction of the central axis of the coating roll 200 may be -θ or 0°. In this case, θ may be larger than 0° and smaller than 90°.

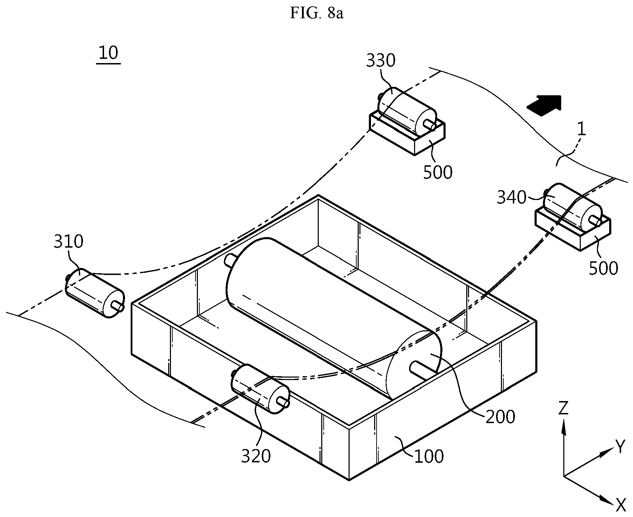

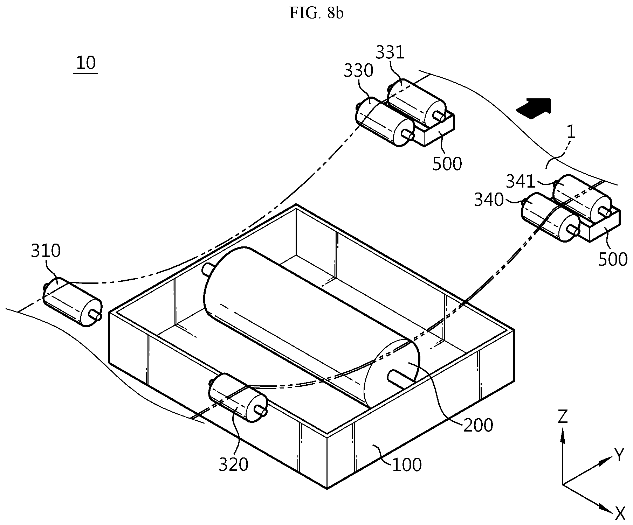

FIG. 8a schematically shows the structure of the coating apparatus 10 according to an embodiment of the present disclosure. FIG. 8b schematically shows the structure of the coating apparatus 10 according to an embodiment of the present disclosure.

In an embodiment of the present disclosure, because the position adjustment roll 300 is cylindrical in shape and can rotate during the transport of the substrate, the coating apparatus 10 may further include a cleaning member 500 to wash the surface of the position adjustment roll 300. For example, the cleaning member 500 is not limited to a particular position and may be located at any position where the contact of the position adjustment roll 300 with the substrate 1 or the transport of the substrate 1 is not impeded. For example, the cleaning member 500 may be disposed in contact with the bottom of the position adjustment roll 300.

In an embodiment of the present disclosure, the cleaning member 500 is not limited to a particular type. The cleaning member 500 may include, for example, a brush type cleaning member, a scraper type cleaning member, an air jet type cleaning member, a liquid spray type cleaning member or a combination thereof.

In an embodiment of the present disclosure, the cleaning member 500 may be disposed at the position adjustment roll 300 on the downstream side. For example, the coating apparatus 10 according to an example of the present disclosure may further include the cleaning member 500 at the position adjustment rolls 330, 340 on the downstream side as shown in FIG. 8a. In this case, any residue remaining on the uncoated portions at the two widthwise end regions of the substrate after the coating solution is transferred to the substrate may be removed, thereby suppressing or preventing sliding phenomenon at the end portions of the coating layer.

In an embodiment of the present disclosure, the position adjustment roll 300 may further include an operation sensor (not shown). Accordingly, in the case of the plurality of position adjustment rolls 300, their rotation speeds may be synchronized, or the angles may be remotely controlled. In this instance, the position adjustment roll 300 may be rotated by a motor actuator (not shown).

In an embodiment of the present disclosure, the position adjustment roll 300 may further include a non-contact measurement sensor (not shown) to measure the thickness of the coating solution transferred to the substrate. When the position adjustment roll 300 is cylindrical in shape, the non-contact measurement sensor may be disposed at a location in a direction perpendicular to the transport direction of the substrate to measure the thickness of the coating solution.

In an embodiment of the present disclosure, the position adjustment roll 300 may be surface- treated. For example, the position adjustment roll 300 may be surface-treated by sandblasting, rubber coating or microtexturing to increase the frictional force with the substrate 1. The surface treatment may make it possible to move or stretch the substrate 1 in the width direction using the position adjustment roll 300. The position adjustment roll may be disposed at any location on the upstream or downstream side.

In an embodiment of the present disclosure, the surface-treated position adjustment roll may be provided together with the position adjustment roll provided with the cleaning member or the position adjustment auxiliary roll provided with the cleaning member. For example, referring to FIG. 8b, the coating apparatus 10 may include the surface-treated position adjustment rolls 330, 340, and further include the position adjustment auxiliary rolls 331, 341 provided with the cleaning member on the further downstream side. In this case, the surface treatment substance may be transferred to a part of the substrate 1 through the surface-treated position adjustment rolls 330, 340, but the position adjustment auxiliary rolls 331, 341 provided with the cleaning member next to the surface-treated position adjustment rolls 330, 340 may remove it, thereby preventing contamination of the uncoated portion of the substrate 1. In this instance, each of the position adjustment auxiliary rolls 331, 341 may be parallel to the coating roll.

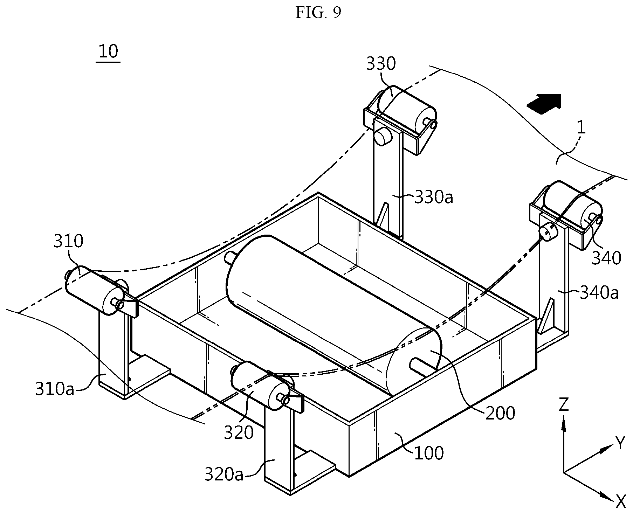

FIG. 9 schematically shows the structure of the coating apparatus 10 according to an embodiment of the present disclosure.

In an embodiment of the present disclosure, the coating apparatus 10 may further include adjustment units 310a, 320a, 330a, 340a disposed outside of the storage unit 100 and configured to adjust the positions of the position adjustment rolls 310, 320, 330, 340. Specifically, the coating apparatus 10 may include the first position adjustment roll's adjustment unit 310a to adjust the position of the first position adjustment roll 310. The coating apparatus 10 may further include the second position adjustment roll's adjustment unit 320a to adjust the position of the second position adjustment roll 320. The coating apparatus 10 may further include the third position adjustment roll's adjustment unit 330a to adjust the position of the third position adjustment roll 330. The coating apparatus 10 may further include the fourth position adjustment roll's adjustment unit 340a to adjust the position of the fourth position adjustment roll 340.

In an embodiment of the present disclosure, the adjustment units 310a, 320a, 330a, 340a may be, for example, secured to the storage unit 100, and may adjust the positions of the position adjustment rolls 310, 320, 330, 340 by moving them in the X-axis direction and the Z-axis direction by a piston device (not shown) in order to adjust the position of the substrate 1.

In an embodiment of the present disclosure, when the adjustment units 310a, 320a, 330a, 340a adjust the positions of the position adjustment rolls 310, 320, 330, 340 by moving them in the X-axis direction and the Z-axis direction by the piston device (not shown) with time, the position of the substrate 1 may be adjusted and the amount of coating solution transfer may be adjusted in the length direction of the substrate (i.e., Y-axis direction).

In an embodiment of the present disclosure, the coating apparatus 10 may further include a measuring device (not shown) to measure the properties of the coating solution, for example, the viscosity of the coating solution, and accordingly, the properties of the coating solution may be measured, and the positions of the position adjustment rolls 310, 320, 330, 340 may be adjusted through the adjustment units 310a, 320a, 330a, 340a based on the measured data to adjust the amount of coating solution transfer to the substrate 1.

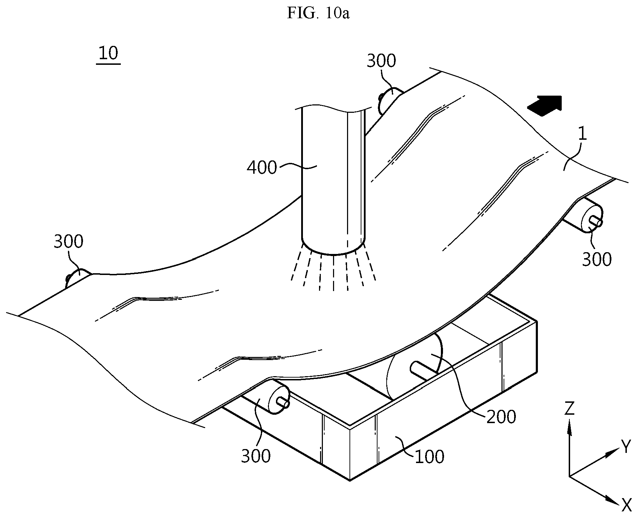

FIG. 10a schematically shows the structure of the coating apparatus 10 according to an embodiment of the present disclosure.

In an embodiment of the present disclosure, the coating apparatus 10 may further include a gas spray unit 400 to spray gas toward the other surface of the substrate 1 opposite to one surface of the substrate 1 that contacts the coating roll 200. As the gas spray unit 400 sprays gas toward the other surface of the substrate, one surface of the substrate 1 may make contact with the coating roll 200 more easily.

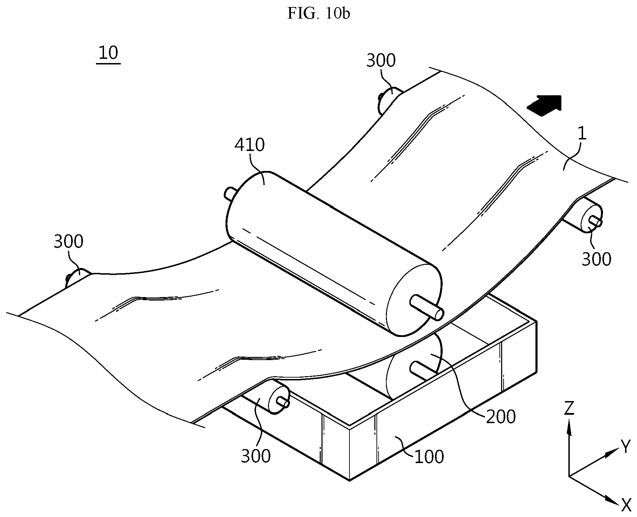

FIG. 10b schematically shows the structure of the coating apparatus 10 according to an embodiment of the present disclosure.

In an embodiment of the present disclosure, the coating apparatus 10 may further include a backup roll 410 that contacts the other surface of the substrate 1 opposite to one surface of the substrate 1 that contacts the coating roll 200. As the backup roll 410 contacts the other surface of the substrate 1, one surface of the substrate 1 may make contact with the coating roll 200 more easily.

In an embodiment of the present disclosure, the position of the backup roll 410 may be adjusted in view of the position of the position adjustment roll 300 and the tension of the substrate 1.

In an embodiment of the present disclosure, the diameter of the backup roll 410 in the X-axis direction may be substantially equal to the diameter of the coating roll 200.

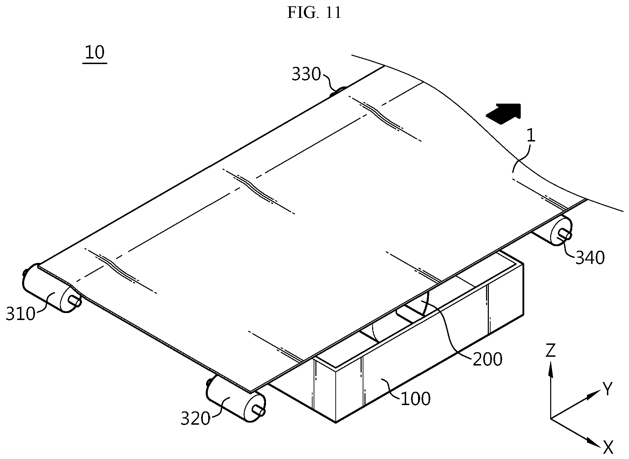

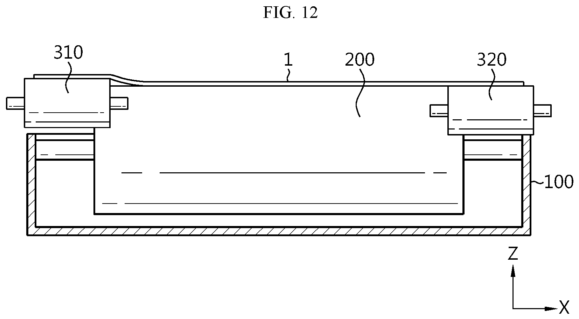

FIG. 11 schematically shows the structure of the coating apparatus 10 according to an embodiment of the present disclosure, and FIG. 12 schematically shows the transfer of the coating solution to at least one surface of the substrate 1 using the coating apparatus 10 according to an embodiment of the present disclosure when viewed from the Y-axis direction.

In an embodiment of the present disclosure, the position of the position-adjusting rolls 310 and 320, which contact either one of the two end portions of the substrate 1, may be moved in the +Z-axis direction so that the coating solution is not transferred onto the portion of the substrate 1 that contacts the position-adjusting rolls 310 and 320.

Meanwhile, in an embodiment of the present disclosure, the positions of the position adjustment rolls 310, 320 may be adjusted without a difference with the positions of the position adjustment rolls 330, 340 that contact the other end portion. In this case, the central portion of the substrate 1 in the width direction does not sag, but as the substrate 1 that contacts the position adjustment roll 310, 320 that contacts any one end portion moves away from the coating roll 200, the coating solution transfer location may be adjusted.

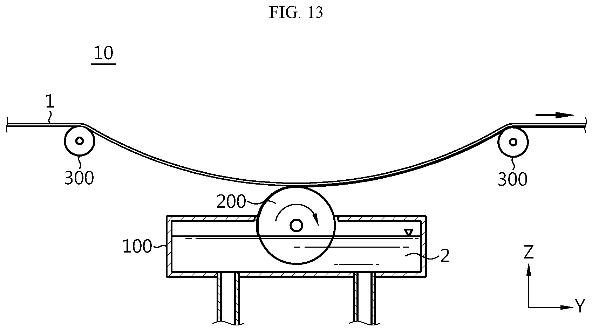

FIG. 13 schematically shows the coating apparatus according to an embodiment of the present disclosure and the transfer of the coating solution to at least one surface of the substrate using the coating apparatus when viewed from the X-axis direction.

In an embodiment of the present disclosure, the storage unit 100 may have any one open side as shown in FIG. 2, or the storage unit 100 may be a closed type as shown in FIG. 13. When the storage unit 100 is a closed type, vaporization of volatile components included in the coating solution may be prevented, and infiltration of foreign matters may be further prevented.

In an embodiment of the present disclosure, the storage unit 100 may further include a nozzle (not shown) to supply the coating solution to a lower portion thereof.

In an embodiment of the present disclosure, the coating roll 200 may include a gravure roll, a reverse gravure roll, an Anilox roll, a doctor roll or a pattern roll.

### <Method for manufacturing separator>

The present disclosure provides a method for manufacturing a separator.

The method for manufacturing the separator using the above-described coating apparatus 10 according to an embodiment of the present disclosure includes step (S10) of feeding, the coating solution into the storage unit; step (S20) of adjusting the position of at least one position adjustment roll that contacts at least one end portion of the substrate in the width direction to bring at least a part of a surface of the substrate being transported in a direction into contact with the coating roll; and step (S30) of transferring the coating solution held in the storage unit to the surface of the substrate using the coating roll.

Hereinafter, each step will be described in detail.

The method for manufacturing the separator of the present disclosure starts with feeding the coating solution into the storage unit 100 (step (S10)). The coating solution 2 may be prepared by adding the binder polymer and the inorganic particles to the solvent and mixing together. The solid content of the coating solution may be in a range of 5 wt% to 40 wt% based on 100 wt% of the coating solution.

In an embodiment of the present disclosure, the binder polymer faithfully performs the role of a binder to improve the mechanical properties of the separator such as flexibility and elasticity, and connect and stably hold the inorganic particles together, thereby contributing to mechanical properties degradation prevention of the finally formed separator. The glass transition temperature T_{g} of the binder polymer may be in a range of -200°C to 200°C.

In addition, the binder polymer does not necessarily have to possess the ability to conduct ions, but when polymer having the ability to conduct ions is used, performance of the lithium secondary battery may be further improved. Accordingly, it may be preferable to use the binder polymer having the dielectric constant that is as high as possible. In practice, the degree of dissociation of salts in the electrolyte solution relies on the dielectric constant of the electrolyte solvent. As the dielectric constant of the binder polymer is higher, the degree of dissociation of salts in the electrolyte solution may be higher. The dielectric constant of the binder polymer may range from 1.0 to 100 (measurement frequency = 1 kHz), and particularly, may be equal to or higher than 10.

In an embodiment of the present disclosure, the binder polymer may become a gel with it is filled with the liquid electrolyte, leading to a high degree of electrolyte swelling. The solubility index of the binder polymer, that is, the Hildebrand solubility parameter may range from 15 to 45 MPa^{1/2}, 15 to 25 MPa^{1/2}, and 30 to 45 MPa^{1/2}. In an embodiment of the present disclosure, when hydrophilic polymers having more polar groups rather than hydrophobic polymers such as polyolefins are used, the solubility index may fall within the aforementioned range. In this instance, when the solubility index is smaller than the lower limit and larger than the upper limit of the aforementioned range, it may result in poor swelling by the commonly used liquid electrolytes for batteries.

In an embodiment of the present disclosure, the inorganic particles are packed in contact with each other and held together by the binder polymer to form interstitial volume between the inorganic particles, and the interstitial volume between the inorganic particles become voids that form pores. The binder polymer may bind the inorganic particles to cause them to stick together and connect and hold the inorganic particles together. In addition, the pores in the separator may be formed by the voids resulting from the interstitial volume between the inorganic particles, and may be a space defined by the inorganic particles substantially in close contact with each other within the closely packed or densely packed structure by the inorganic particles.

In an embodiment of the present disclosure, the binder polymer is not limited to a particular type and may include any type of binder polymer commonly used in the corresponding technical field. The binder polymer may include, for example, polymethylmethacrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, or two or more thereof.

In this instance, the binder polymer may include a particle-type binder or a soluble binder. When the binder polymer is a particle-type binder, the binder polymer does not dissolve in the solvent. When the binder polymer is a soluble binder, the binder polymer dissolves in the solvent. In this instance, the solvent may include an aqueous solvent or an organic solvent.

In an embodiment of the present disclosure, the inorganic particles are not particularly limited as long as they are electrochemically stable. That is, the inorganic particles that may be used in the present disclosure are not limited to a particular type and may include any type of inorganic particles in which oxidation and/or reduction reaction does not occur in the operating voltage range (for example, 0V to 5V vs Li/Li+) of the electrochemical device applied. In particular, when inorganic particles having high dielectric constant are used as the inorganic particles, it may contribute to the increased degree of dissociation of an electrolyte salt, for example, a lithium salt, in the liquid electrolyte, thereby improving ionic conductivity of the electrolyte solution.

By the above-described reasons, the inorganic particles preferably include high-dielectric constant inorganic particles having the dielectric constant of 5 or more, and preferably 10 or more. Non-limiting examples of the inorganic particles having the dielectric constant of 5 or more include BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, SiC, TiO₂, or a mixture thereof.

In addition, the inorganic particles may include inorganic particles having the ability to transport lithium ions, i.e., inorganic particles that contain lithium but do not store lithium and have the function of moving lithium ions. Non-limiting examples of the inorganic particles having the ability to transport lithium ions include lithium phosphate (Li₃PO₄), lithium titanium phosphate (LixTiy(PO₄)₃, 0 < x < 2 , 0 < y < 3 ), lithium aluminum titanium phosphate (LiₓAl_{y}Ti_{z}(PO₄)₃, 0 < x < 2, 0 < y <1, 0 < z < 3), (LiAlTiP)ₓO_{y}-based glass (0 < x < 4 , 0 < y < 13) such as 14Li₂O-9Al₂O₃-38TiO₂-39P₂O₅, lithium lanthanum titanate (LiₓLa_{y}TiO₃, 0 < x < 2 , 0 < y < 3), lithium germanium thiophosphate (LiₓGe_{y}P_{z}S_{w}, 0 < x < 4, 0< y < 1, 0 < z < 1, 0 < w < 5) such as Li_{3.25}Ge_{0.25}P_{0.75}S₄, lithium nitride (LiₓN_{y}, 0 < x < 4, 0 < y < 2) such as Li₃N, SiS₂-based glass (LiₓSi_{y}S_{z}, 0 < x < 3, 0 <y < 2, 0 < z < 4) such as Li₃PO₄-Li₂S-SiS₂, P₂S₅-based glass (LiₓP_{y}S_{z}, 0 < x < 3, 0< y < 3, 0 < z < 7) such as LiI-Li₂S-P₂S₅, or a mixture thereof.

In addition, the average particle size D₅₀ of the inorganic particles (single particles) is not limited to a particular range, but preferably ranges from 0.1 µm to 1.5 µm to form the coating layer with even thickness and optimal porosity. When the average particle size of the inorganic particles is below the lower limit, dispersion may be reduced, and when the average particle size of the inorganic particles is above the upper limit, the inorganic coating layer may be formed with a larger thickness.

In an embodiment of the present disclosure, the inorganic particles may be included in a range of 10 wt% to 90 wt% based on the solid content 100 wt% of the coating solution.

In an embodiment of the present disclosure, the solvent may include an aqueous solvent or an organic solvent.

In an embodiment of the present disclosure, the aqueous solvent may include water or an aqueous solvent including water. Furthermore, when there are limits to drying speed and temperature, methanol, ethanol or isopropyl alcohol having lower boiling point than water may be used together.

In an embodiment of the present disclosure, the organic solvent may include cyclic aliphatic hydrocarbons including cyclopentane or cyclohexane; aromatic hydrocarbons including toluene, xylene or ethylbenzene; ketones including acetone, ethyl methyl ketone, diisopropyl ketone, cyclohexanone, methylcyclohexane or ethylcyclohexane; chlorinated aliphatic hydrocarbons including methylene chloride, chloroform or carbon tetrachloride; esters including ethyl acetate, butyl acetate, γ-butyrolactone or ε-caprolactone; acylonitriles including acetonitrile or propionitrile; ethers including tetrahydrofuran or ethylene glycol diethyl ether; alcohols including methanol, ethanol, isopropanol, ethylene glycol or ethylene glycol monomethyl ether; or amides including N-methylpyrrolidone or N,N-dimethylformamide. The organic solvent may include acetone when considering the advantages of the drying process.

In an embodiment of the present disclosure, these organic solvents may be used alone or in combination. Among them, particularly, solvents having low boiling point and high volatility are desirable because they are removed at low temperature in a short time. Specifically, such solvents may preferably include acetone, toluene, cyclohexanone, cyclopentane, tetrahydrofuran, cyclohexane, xylene, N-methylpyrrolidone, or a mixture thereof.

Subsequently, the positions of the plurality of position adjustment rolls that contact the two end portions of the substrate in the width direction are adjusted to bring at least a part of a surface of the substrate being transported in a direction into contact with the coating roll (step (S20)).

In an embodiment of the present disclosure, the position of the position adjustment roll may be adjusted by the adjustment unit 310a, 320a, 330a, 340a according to an embodiment of the present disclosure.

In an embodiment of the present disclosure, in the step (S20), the position of at least one position adjustment roll may be adjusted so that the tension of the substrate 1 is 10 N to 200 N. In this instance, a commonly used tension meter may be used to measure the tension at the central portion of the substrate 1 in the width direction.

In an embodiment of the present disclosure, the step (S20) may include a step of adjusting the position of the position adjustment roll 300 that contacts any one of the two end portions of the substrate 1. In this case, the coating solution transfer location on the substrate 1 may be adjusted.

In an embodiment of the present disclosure, in the step (S20), the positions of the plurality of position adjustment rolls may be moved with time. For example, the plurality of position adjustment rolls 310, 320, 330, 340 may be adjusted with the movement by the adjustment units 310a, 320a, 330a, 340a in the X-axis direction and the Z-axis direction by the piston device (not shown) with time. Accordingly, it may be possible to adjust the amount of coating solution transfer in the length direction (i.e., Y-axis direction) of the substrate 1 in which the coating solution 2 is transferred.

Subsequently, the coating solution 2 held in the storage unit 100 is transferred to a surface of the substrate 1 using the coating roll 200 (step (S30)). The method of coating the coating solution 2 on a surface of the substrate 1 may be preferably performed by a roll coating method.

In an embodiment of the present disclosure, in the step (S30), the coating solution transfer area on surface of the substrate may be 50% to 99%, or 60% to 90% based on the total area 100% of surface of the substrate. When the coating solution transfer area falls within the aforementioned range, the quality of the separator may be improved.

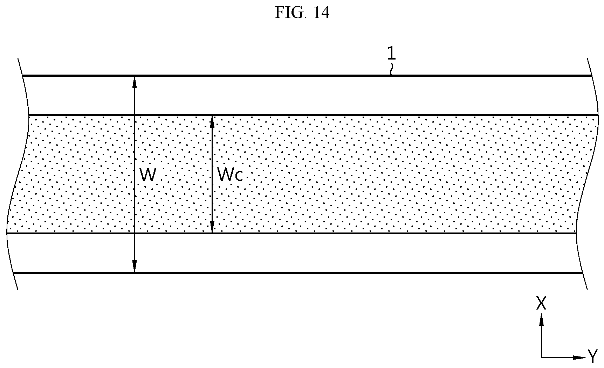

FIG. 14 schematically shows the coating solution 2 transferred to at least one surface of the substrate 1 according to an embodiment of the present disclosure.

In an embodiment of the present disclosure, in the step (S30), a ratio Wc/W of a length Wc of the coating solution transfer area in the width direction to a total length W of the substrate in the width direction may be 0.8 to 0.99. When the ratio Wc/W of the length Wc of the coating solution transfer area in the width direction to the total length W of the substrate in the width direction falls within the aforementioned range, it may be possible to avoid quality reducing during drying due to the uncoated portion, and minimize the coating layer at the area that will be discarded during slitting in the final step, thereby minimizing the use of the coating solution.

In an embodiment of the present disclosure, the step (S30) may further include a step of spraying gas toward the other surface of the substrate 1 opposite to one surface that contacts the coating roll 200. Spraying gas toward the opposite surface facilitates the contact between the substrate 1 and the coating roll 200, and the amount of the coating solution transferred from the coating roll 200 may be controlled by adjusting the amount, intensity, and duration of the gas spraying.

## Claims

1. A coating apparatus comprising:
a storage unit configured to hold a coating solution;
a coating roll disposed in the storage unit and configured to transfer the coating solution from the storage unit to at least one surface of a substrate being transported in a direction; and
at least one position adjustment roll spaced apart from the storage unit and configured to adjust a height of the substrate while in contact with at least one end portion of the substrate in a width direction.

2. The coating apparatus according to claim 1,
wherein the position adjustment roll contacts the surface of the substrate to which the coating solution is transferred.

3. The coating apparatus according to claim 1,
wherein the at least one position adjustment roll is disposed on each of an upstream side and a downstream side of a transport direction of the substrate, and
wherein a central axis of the position adjustment roll on the upstream side and a central axis of the position adjustment roll on the downstream side are parallel to each other.

4. The coating apparatus according to claim 1,
wherein the position adjustment roll includes:
a first position adjustment roll disposed at a first position;
a second position adjustment roll disposed at a second position;
a third position adjustment roll disposed at a third position; and
a fourth position adjustment roll disposed at a fourth position, according to the position of the position adjustment roll, and
wherein the first position adjustment roll is located on a left front side,
the second position adjustment roll is located on a right front side,
the third position adjustment roll is located on a left rear side, and
the fourth position adjustment roll is located on a right rear side.

5. The coating apparatus according to claim 4,
wherein when an angle between a direction of a central axis of the first position adjustment roll and a direction of a central axis of the coating roll is -θ, an angle between a direction of a central axis of the second position adjustment roll and the direction of the central axis of the coating roll is θ.

6. The coating apparatus according to claim 4,
wherein a direction of a central axis of the first position adjustment roll and a direction of a central axis of the third position adjustment roll are parallel.

7. The coating apparatus according to claim 4,
wherein when an angle between a direction of a central axis of the first position adjustment roll and a direction of a central axis of the coating roll is -θ, the position adjustment roll further includes a first position adjustment auxiliary roll that precedes the contact of the first position adjustment roll and the substrate, and having an angle of -θ' with the direction of the central axis of the coating roll, and
wherein θ' is smaller in size than θ.

8. The coating apparatus according to claim 1, further comprising:
a cleaning member configured to wash a surface of the position adjustment roll.

9. The coating apparatus according to claim 1,
wherein the position adjustment roll is surface-treated.

10. The coating apparatus according to claim 1, further comprising:
an adjustment unit disposed outside of the storage unit and configured to adjust a position of the position adjustment roll.

11. The coating apparatus according to claim 1, further comprising:
a gas spray unit configured to spray gas toward the other surface of the substrate opposite to one surface of the substrate that contacts the coating roll.

12. A method for manufacturing a separator using the coating apparatus of claim 1, the method comprising:
step (S10) of feeding a coating solution to the storage unit;
step (S20) of adjusting a position of at least one position adjustment roll that contacts at least one end portion of a substrate in a width direction to bring at least a part of a surface of the substrate being transported in a direction into contact with the coating roll; and
step (S30) of transferring the coating solution held in the storage unit to the surface of the substrate using the coating roll.

13. The method for manufacturing the separator according to claim 12,
wherein in the step (S20), the position of the at least one position adjustment roll is adjusted so that a tension of the substrate is 10 N to 200 N.

14. The method for manufacturing the separator according to claim 12,
wherein in the step (S20), the position of the at least one position adjustment roll is moved with time.

15. The method for manufacturing the separator according to claim 12,
wherein in the step (S30), a coating solution transfer area on the surface of the substrate is 50% to 99% based on a total area 100% of the surface of the substrate.

16. The method for manufacturing the separator according to claim 12,
wherein in the step (S30), a ratio Wc/W of a length W of a coating solution transfer area in a width direction to a total length W of the substrate in the width direction is 0.8 to 0.99.

17. The method for manufacturing the separator according to claim 12,
wherein the step (S30) further comprises a step of spraying gas toward the other surface of the substrate opposite to one surface of the substrate that contacts the coating roll.
